# EUROPÄISCHE PATENTSCHRIFT

(11) **EP 0 816 393 B1**
(45) Veröffentlichungstag und Bekanntmachung des Hinweises auf die Patenterteilung: **19.11.2003**
(21) Anmeldenummer: 97810395.0
(22) Anmeldetag: 23.06.1997
(51) Int. Cl.: C08F 8/32, C08G 59/58

(54) **Härter für Epoxidharze**
Curing agent for epoxy resins
Durcisseurs pour résines époxydes

(30) Priorität: 02.07.1996 CH 165896; 10.07.1996 CH 174596
(43) Veröffentlichungstag der Anmeldung: 07.01.1998
(73) Patentinhaber: Vantico AG, 4057 Basel (CH)
(72) Erfinder: Roth, Martin, 4434 Hölstein (CH); Tang, Qian, 4104 Oberwil (CH); Eldin, Sameer Hosam, 1784 Courtepin (CH)
(74) Vertreter: Dannappel, Hans-Jochen, Dr.

(56) Entgegenhaltungen:
- EP-A- 0 114 478
- EP-A- 0 123 793
- EP-A- 0 189 553
- EP-A- 0 362 787
- EP-A- 0 440 583
- EP-A- 0 578 613
- DE-A- 4 007 559
- FR-A- 2 318 203
- US-A- 4 503 174
- DATABASE WPI Section Ch, Week 9610 Derwent Publications Ltd., London, GB; Class A14, AN 96-094276 XP002084053 & JP 08 003281 A (SHINTO TORYO KK) , 9. Januar 1996
- DATABASE WPI Section Ch, Week 9136 Derwent Publications Ltd., London, GB; Class A21, AN 91-264065 XP002084054 & JP 03 174432 A (DAINIPPON INK & CHEM KK) , 29. Juli 1991

## Beschreibung

Die vorliegende Erfindung betrifft ein Reaktionsprodukt aus einem Carbonsäuregruppen enthaltenden Mikrogel und einer stickstoffhaltigen Base (Mikrogel-Amin-Salz bzw. Mikrogel-Imidazol-Salz), ein Verfahren zur Herstellung eines solchen Reaktionsprodukts, eine Zusammensetzung enthaltend ein solches Reaktionsprodukt und ein Epoxidharz sowie vemetzte Produkte erhältlich durch Härtung dieser Zusammensetzung.

Stickstoffhaltige Basen sind dem Fachmann als Härter oder Härtungsbeschleuniger für Epoxidharze wohlbekannt. Solche Systeme weisen allerdings nur eine beschränkte Lagerstabilität auf, da diese Basen bereits bei relativ niedriger Temperatur, teilweise bereits bei Raumtemperatur, mit Epoxiden reagieren, was sich in einem Viskositätsanstieg der Epoxidharzformulierung äussert und bei längerer Lagerdauer zur Gelierung der Mischung führt. Mit zunehmender Reaktivität der stickstoffhaltigen Base wird die Lagerstabilität der Epoxidharzmischung vermindert und die Gebrauchsdauer (Topfzeit) verkürzt. Aus diesem Grund werden solche Systeme als Zwei-Komponenten-Systeme formuliert, d.h. Epoxidharz und stickstoffhaltige Base werden getrennt gelagert und erst kurz vor der Verarbeitung gemischt.
Es hat nicht an Versuchen gefehlt, die Lagerstabilität solcher Systeme durch Entwicklung von Härtungssystemen mit hoher Latenz zu verbessern. Eine hohe Latenz bedeutet eine hohe Stabilität bei der jeweiligen Lagertemperatur, ohne dass die Reaktivität bei der gewünschten Härtungstemperatur wesentlich reduziert wird.

In der EP-A 0 114 478 wird die Herstellung wässeriger Dispersionen von Mikrogel Partikeln beschrieben, welche als Stabilisatoren für in Wasser dispergierbare Harze, wie z. B. Epoxidharze, verwendet werden können. Die aus einer wässerigen Emulsionspolymerisation resultierende wässerige Emulsion der Mikrogel Partikel kann so wie sie ist verwendet werden (Methode A), oder es kann, alternativ, das Mikrogel isoliert, getrocknet und anschliessend wiederum in wässeriger Lösung dispergiert werden (Methode B). Gemäss der Methode A wird eine wässerige Emulsion der Mikrogelpartikel mit dem Film formenden Harz gemischt. Ein Amin wird nachfolgend hinzugegeben, gefolgt von der Zugabe eines Aminoplasten. Die so erhaltende Dispersion kann direkt verwendet werden. Nach Methode B wird ein festes Mikrogel aus der wässerigen Emulsion isoliert. Ein Epoxidharz wird in einen organischen Lösemittel gelöst. Das pulverisierte Mikrogel und Wasser werden nacheinander zu der Epoxidharzlösung gegeben. Anschliessend wird ein Amin zugegeben, gefolgt von einem Aminoplasten. Es resultiert ein dispergiertes Epoxidharz.

In der EP-A-304 503 werden master batches aus enkapsulierten Materialien und Epoxiden als latente Härter für Epoxidharze beschrieben, wobei das Core-Material ein pulverförmiges tertiäres Amin ist, das von einer Schale aus dem Reaktionsprodukt desselben Amins mit einem Epoxidharz umgeben ist.

Ein ähnliches Härtungssystem, jedoch mit einem Core-Material aus einem Amin und einem Anhydrid, wird in der JP-A-Hei 02-191624 offenbart.

Solche latenten Härter bzw. Beschleuniger auf Basis von enkapsulierten Partikeln sind zwar zur Herstellung von lagerstabilen Ein-Komponenten-Systemen geeignet, weisen jedoch den Nachteil einer ungenügenden Stabilität gegenüber mechanischen Einwirkungen, wie z.B. Scherkräften und Druckbelastungen, auf.

Aufgabe der vorliegenden Erfindung war es, latente Epoxid-Härtungssysteme mit verbesserter Topfzeit bereitzustellen, die auch eine hohe Stabilität gegenüber mechanischer Beanspruchung in Form von Scherkräften besitzen.

Es wurde nun gefunden, dass Salze von Mikrogelen enthaltend COOH-Gruppen und Stickstoff-Basen das geforderte Eigenschaftsprofil aufweisen.

Gegenstand der vorliegenden Erfindung ist ein Reaktionsprodukt aus einem Carbonsäuregruppen enthaltenden Mikrogel und einer stickstoffhaltigen Base in Form eines festen Pulvers, wobei die Anzahl der Carbonsäuregruppen im Produkt gleich gross oder grösser ist als die Anzahl der basischen Stickstoffatome.

Unter Mikrogelen versteht man im allgemeinen Makromoleküle, deren Kettensegmente im Bereich der einzelnen Knäuel über kovalente Brücken vernetzt sind.
Mikrogele können nach verschiedenen bekannten Polymerisationsmethoden hergestellt werden. Vorteilhaft ist die Emulsionspolymerisation von Verbindungen mit polymerisierbaren C-C-Doppelbindungen in Gegenwart von sogenannten mehrfunktionellen Vernetzern, beispielsweise nach der Saat-Methode (seeding technique). Dabei liegen die Mikrogelpartikel nach der Polymerisation in Form einer wässrigen Emulsion oder Suspension vor. Die weitere Umsetzung mit der stickstoffhaltigen Base kann vorzugsweise mit einer solchen Emulsion/Suspension erfolgen. Es ist aber auch möglich, das Mikrogel zunächst in Form eines festen Pulvers, z.B. mittels Sprühtrocknung oder Gefriertrocknung, zu isolieren, oder die wässrige Emulsion durch Lösungsmittelaustausch in eine organische Phase zu überführen.
Als mehrfunktionelle Vernetzer können im Prinzip alle Verbindungen, die mindestens zwei polymerisierbare C-C-Doppelbindungen enthalten, Anwendung finden.
Dabei entstehen intramolekular vernetzte Copolymere, die im allgemeinen Partikelgrössen im Nanometerbereich (ca. 5-1000 nm) aufweisen.

Ein bevorzugtes Mikrogel zur Herstellung des erfindungsgemässen Reaktionsprodukts ist ein Copolymer aus mindestens einer ungesättigten Carbonsäure und mindestens einem mehrfunktionellen Vernetzer.

Ein besonders bevorzugtes Mikrogel ist ein Copolymer aus mindestens einer ungesättigten Carbonsäure, mindestens einem carbonsäuregruppenfreien Vinylmonomer und mindestens einem mehrfunktionellen Vernetzer.

Zur Herstellung von Carbonsäuregruppen enthaltenden Mikrogelen eignen sich grundsätzlich alle Carbonsäuren, die eine polymerisierbare C-C-Doppelbindung enthalten.

Bevorzugte ungesättigte Carbonsäuren sind Acrylsäure, Methacrylsäure, 2-Carboxyethylacrylat, 2-Carboxyethylmethacrylat, Phthalsäuremono(2-acryloylethyl)ester, Phthalsäuremono(2-methacryloylethyl)ester, Maleinsäure, Maleinsäuremonomethylester, Maleinsäuremonoethylester, Fumarsäure, Fumarsäuremonomethylester, Fumarsäuremonoethylester, Itaconsäure, Zimtsäure, Crotonsäure, 4-Vinylcyclohexancarbonsäure, 4-Vinylphenylessigsäure und p-Vinylbenzoesäure.

Acrylsäure und Methacrylsäure sind insbesondere bevorzugt.

Als mehrfunktionelle Vemetzer eignen sich grundsätzlich alle Verbindungen, die mindestens zwei polymerisierbare C-C-Doppelbindungen enthalten. Ebenfalls geeignet als mehrfunktionelle Vernetzer sind Gemische aus mindestens zwei Vinylmonomeren, wie z.B. Methacrylsäure und Glycidylmethacrylat, die über zusätzliche funktionelle Gruppen während oder nach der Polymerisationsreaktion miteinander reagieren können.

Vorzugsweise wird ein polyfunktioneller Acrylsäureester oder Methacrylsäureester eines aliphatischen, cycloaliphatischen oder aromatischen Polyols, ein Additionsprodukt von Acrylsäure oder Methacrylsäure und einer Polyglycidylverbindung, ein Additionsprodukt von Acrylsäure oder Methacrylsäure und Glycidylacrylat oder -methacrylat, ein Acrylsäurealkenylester oder Methacrylsäurealkenylester, ein Dialkenylcyclohexan oder ein Dialkenylbenzol als mehrfunktioneller Vernetzer verwendet.

Besonders bevorzugte mehrfunktionelle Vemetzer sind Ethylenglykoldiacrylat, Ethylenglykoldimethacrylat, Propylenglykoldiacrylat, Propylenglykoldimethacrylat, 1,4-Butandioldiacrylat, 1,4-Butandioldimethacrylat, Polyethylenglykoldiacrylat, Polyethylenglykoldimethacrylat, Polypropylenglykoldiacrylat,
Polypropylenglykoldimethacrylat, 1,1,1-Trimethylolpropantriacrylat, 1,1,1-Trimethylolpropantrimethacrylat, Bisphenol-A-diglycidyletherdiacrylat, Bisphenol-A-diglycidyletherdimethacrylat, Acrylsäureallylester, Methacrylsäureallylester, Divinylcyclohexan und Divinylbenzol.

Das zur Herstellung der Mikrogele verwendete Monomerengemisch kann ein oder mehrere carbonsäuregruppenfreie Vinylmonomere enthalten, wie zum Beispiel Butadien und Butadienderivate, Acrylnitril, Methacrylnitril, Acrylsäureester und -amide, Methacrylsäureester und -amide, Vinylether und -ester, Allylether und -ester, Styrol und Styrolderivate.

Bevorzugte carbonsäuregruppenfreie Vinylmonomere sind Alkylester, Hydroxyalkylester und Glycidylester von ungesättigten Carbonsäuren und Styrolderivate.

Besonders bevorzugte carbonsäuregruppenfreie Vinylmonomere sind Methylacrylat, Methylmethacrylat, Ethylacrylat, Ethylmethacrylat, 2-Hydroxyethylacrylat, 2-Hydroxyethylmethacrylat, Butylacrylat, Butylmethacrylat, 2-Ethylhexylacrylat, 2-Ethylhexylmethacrylat und Styrol.

Das erfindungsgemässe Reaktionsprodukt wird vorzugsweise aus einem Mikrogel hergestellt, welches ein Copolymer aus 2-70 Gew.-% mindestens einer ungesättigten Carbonsäure, 0-96 Gew.-% mindestens eines carbonsäuregruppenfreien Vinylmonomers und 2-70 Gew.-% mindestens eines mehrfunktionellen Vernetzers ist, wobei die Summe der Gewichtsprozentanteile immer 100 beträgt.

Besonders bevorzugte Mikrogele sind Copolymere aus 5-50 Gew.-%, insbesondere 10-40 Gew.-%, mindestens einer ungesättigten Carbonsäure, 0-90 Gew.-%, insbesondere 30-85 Gew.-%, mindestens eines carbonsäuregruppenfreien Vinylmonomers und 5-50 Gew.-%, insbesondere 5-30 Gew.-% mindestens eines mehrfunktionellen Vernetzers.

Die erfindungsgemässen Reaktionsprodukte werden im folgenden vereinfachend als "Mikrogel-Amin-Salze" bezeichnet, wobei der Begriff "Amin" in diesem Zusammenhang ganz allgemein für "stickstoffhaltige Basen" steht und nicht auf die Bedeutung des Begriffs "Amin" im strengeren Sinne beschränkt ist.

Geeignete stickstoffhaltige Basen zur Herstellung der erfindungsgemässen Reaktionsprodukte sind im Prinzip alle basischen Verbindungen, die mindestens ein basisches Stickstoff-Atom enthalten.
Beispiele dafür sind aliphatische, cycloaliphatische und aromatische Amine sowie gesättigte und ungesättigte N-Heterocyclen.

Es können primäre, sekundäre und tertiäre Amine eingesetzt werden; auch die Verwendung von Verbindungen mit mehreren basischen Stickstoffatomen ist möglich. Beispiele dafür sind Imidazole, Polyamine, wie Triethylentetramin oder Isophorondiamin, Polyaminoamide, wie zum Beispiel die Reaktionsprodukte von aliphatische Polyaminen und dimerisierten oder trimerisierten Fettsäuren, aber auch Polyoxyalkylenamine, wie z. B. Jeffamine® (Fa. Texaco).

Vorzugsweise wird ein Amin, ein Polyamin oder ein Imidazol eingesetzt.

Natürlich sind auch Gemische von Aminen und Imidazolen geeignet.

Besonders bevorzugte stickstoffhaltige Basen sind die Amine und Imidazole der Formeln I, II oder III

NR₁R₂R₃ (I),

R₄R₅N-A-NR₆R₇ (II)

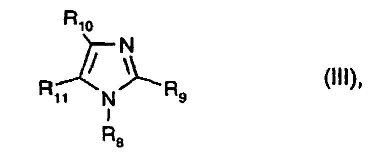

worin R₁ bis R₇ unabhängig voneinander Wasserstoff, C₁-C₁₂-Alkyl, unsubstituiertes oder substituiertes Phenyl, Benzyl, Phenylethyl, Cyclopentyl oder Cyclohexyl bedeuten, oder R₂ und R₃ oder R₄ und R₅ oder R₆ und R₇ zusammen Tetramethylen, Pentamethylen,
-(CH₂)₂-O-(CH₂)₂- oder -(CH₂)₂-NH-(CH₂)₂- darstellen,
A für C₁-C₃₀-Alkandiyl steht,
R₈ bis R₁₁ unabhängig voneinander Wasserstoff, C₁-C₁₈-Alkyl, Phenyl oder Benzyl bedeuten oder R₈ und R₉ oder R₈ und R₁₁ oder R₁₀ und R₁₁ zusammen Tetramethylen, Pentamethylen, -(CH₂)₂-O-(CH₂)₂- oder -(CH₂)₂-NH-(CH₂)₂- darstellen.

Beispiele für Amine der Formel I sind Trimethylamin, Triethylamin, Phenyldimethylamin, Diphenylmethylamin, Triphenylamin, Benzylamin, N,N-Dimethylbenzylamin, Pyrrolidin, N-Methylpyrrolidin, N-Methylpiperidin und N-Phenylpiperidin.

Geeignete Diamine der Formel II sind beispielsweise 1,2-Diaminoethan und N,N,N',N'-Tetramethyl-1,2-diaminoethan.

Beispiele für Imidazole der Formel III sind Imidazol, 1-Methylimidazol, 2-Methylimidazol, 2-Phenylimidazol, 2-lsopropylimidazol, 2-Dodecylimidazol, 2-Heptadecylimidazol und 2-Ethyl-4-methylimidazol.

2-Phenylimidazol, 2-Isopropylimidazol, 2-Dodecylimidazol, 2-Heptadecylimidazol und 2-Ethyl-4-methylimidazol sind ganz besonders bevorzugte stickstoffhaltige Basen.

Die Umsetzung der stickstoffhaltigen Base mit dem Carbonsäuregruppen enthaltenden Mikrogel erfolgt vorzugsweise in Lösung. Bevorzugte Lösungsmittel sind Wasser und Mischungen von Wasser mit wassermischbaren Lösungsmitteln, wie z.B. Methanol, Ethanol, Isopropanol oder Aceton. Dabei kann die bei der Herstellung des Mikrogels durch Emulsionspolymerisation anfallende Emulsion oder Suspension direkt eingesetzt werden. Die Reaktionstemperaturen betragen zweckmässig 0-200 °C, vorzugsweise 10-100 °C. Das Mengenverhältnis der Ausgangsprodukte kann dabei in weiten Bereichen variieren. Zweckmässig werden jedoch solche Mengen von Carbonsäuregruppen enthaltendem Mikrogel und stickstoffhaltiger Base eingesetzt, dass die COOH-Gruppen im Verhältnis zu basischen Stickstoffatomen in äquimolaren Mengen oder im Überschuss vorliegen. Die Anzahl der basischen Stickstoffatome beträgt, bezogen auf die Anzahl der COOH-Gruppen im Mikrogel, vorzugsweise 5-100 mol-%, besonders bevorzugt 30-100 mol-% und insbesondere bevorzugt 60-95 mol-%.
Die Isolierung des Mikrogel-Amin-Salzes als festes Pulver kann mittels Sprühtrocknung oder Lyophilisation erfolgen. Es ist aber auch möglich, die Emulsion/Suspension mit bekannten Methoden (Elektrolytzugabe, Ausfrieren) zu koagulieren und das ausgefallene Produkt durch Filtration als feste Substanz zu isolieren, die gegebenenfalls durch weiteres Pulverisieren in die gewünschte Partikelgrösse überführt werden kann. Ausserdem kann das Produkt gewonnen werden, indem die Emulsion zur Trockne eingedampft wird und der Rückstand mit bekannten Methoden in die gewünschte Form überführt wird.

Einen weiteren Erfindungsgegenstand bildet ein Verfahren zur Herstellung eines Reaktionsproduktes nach Anspruch 1, dadurch gekennzeichnet, dass ein Carbonsäuregruppen enthaltendes Mikrogel mit einer stickstoffhaltigen Base bei einer Temperatur von 0 °C bis 200 °C vorzugsweise in Lösung umgesetzt wird, wobei die Edukte in solchen Mengen eingesetzt werden, dass die Anzahl der Carbonsäuregruppen gleich gross oder grösser ist als die Anzahl der basischen Stickstoffatome, und das Reaktionsprodukt in Form eines festen Pulvers mittels Sprühtrocknung, Lyophilisation oder anderen bekannten Methoden isoliert wird.

Die Herstellungsmethode der erfindungsgemässen Mikrogel-Amin-Salze ist, im Vergleich zur Herstellung der enkapsulierten Amine gemäss EP-A-304 503, deutlich einfacher.

Wie eingangs erwähnt, eignen sich die erfindungsgemässen Mikrogel-Amin-Salze insbesondere als Härter oder Härtungsbeschleuniger für Epoxidharze.

Ein weiterer Erfindungsgegenstand ist daher eine Zusammensetzung enthaltend
(a) ein Epoxidharz mit durchschnittlich mehr als einer 1,2-Epoxidgruppe pro Molekül und
(b) ein Reaktionsprodukt aus einem Carbonsäuregruppen enthaltenden Mikrogel und einer stickstoffhaltigen Base (Mikrogel-Amin-Salz).

Zur Herstellung der erfindungsgemässen Zusammensetzungen eignen sich als Komponente (a) die in der Epoxidharztechnik üblichen Epoxidharze. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen mit Epichlorhydrin oder β-Methylepichlorhydrin unter alkalischen Bedingungen oder in Anwesenheit eines sauren Katalysators mit anschliessender Alkalibehandlung.
   Die Glycidylether dieses Typs leiten sich beispielsweise von acyclischen Alkoholen ab, z.B. von Ethylenglykol, Diethylenglykol oder höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Weitere Glycidylether dieses Typs leiten sich ab von cycloaliphatischen Alkoholen, wie 1,4-Cyclohexandimethanol, Bis-(4-hydroxycyclohexyl)-methan oder 2,2-Bis-(4-hydroxycyclohexyl)-propan, oder von Alkoholen, die aromatische Gruppen und/oder weitere funktionelle Gruppen enthalten, wie N,N-Bis-(2-hydroxyethyl)-anilin oder p,p'-Bis-(2-hydroxyethylamino)-diphenylmethan.
   Die Glycidylether können auch auf einkerningen Phenolen, wie beispielsweise Resorcin oder Hydrochinon, oder auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan oder 2,2-Bis-(3,5-dibrom-4-hydroxyphenyl)-propan, basieren.
   Weitere geeignete Hydroxyverbindungen zur Herstellung von Glycidylethern sind Novolake, erhältlich durch Kondensation von Aldehyden, wie Formaldehyd, Acetaldehyd, Chloral oder Furfuraldehyd, mit Phenolen oder Bisphenolen, die unsubstituiert oder mit Chloratomen oder C₁-C₉-Alkylgruppen substituiert sind, wie beispielsweise Phenol, 4-Chlorphenol, 2-Methylphenol oder 4-tert.-Butylphenol.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithioten, wie beispielsweise Ethan-1,2-dithiol oder Bis-(4-mercaptomethylphenyl)-ether, ableiten.
V) Cycloaliphatische Epoxidharze, wie beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Bevorzugt verwendet man zur Herstellung der erfindungsmässen Epoxidharzzusammensetzungen einen flüssigen oder festen Polyglycidylether oder -ester, insbesondere einen flüssigen oder festen Bisphenoldiglycidylether oder einen festen oder flüssigen Diglycidylester einer cycloaliphatischen oder aromatischen Dicarbonsäure, oder ein cycloaliphatisches Epoxidharz. Es können auch Gemische von Epoxidharzen verwendet werden.

Als feste Polyglycidylether und -ester kommen Verbindungen mit Schmelzpunkten oberhalb Raumtemperatur bis etwa 250°C in Betracht. Bevorzugt liegen die Schmelzpunkte der festen Verbindungen im Bereich von 50 bis 150°C. Solche festen Verbindungen sind bekannt und zum Teil im Handel erhältlich. Als feste Polyglycidylether und -ester können auch die durch Vorverlängerung von flüssigen Polyglycidylethern und -estern erhaltenen Advancement-Produkte verwendet werden.

Insbesondere enthalten die erfindungsgemässen Epoxidharzzusammensetzungen einen flüssigen Polyglycidylether oder -ester.

Besonders bevorzugt als Komponente (a) sind Bisphenol A-diglycidylether und Bisphenol F-diglycidylether.

Die erfindungsgemässen Mikrogel-Amin-Salze können nicht nur als Härter sondern auch als Beschleuniger für die Härtung mit anderen Härtungsmitteln eingesetzt werden.

Gegenstand der vorliegenden Erfindung ist daher auch eine Zusammensetzung enthaltend
(a) ein Epoxidharz mit durchschnittlich mehr als einer 1,2-Epoxidgruppe pro Molekül,
(b) ein Reaktionsprodukt aus einem Carbonsäuregruppen enthaltenden Mikrogel und einer stickstoffhaltigen Base (Mikrogel-Amin-Salz) und
(c) einen von der Komponente (b) verschiedenen Härter für das Epoxidharz (a).

Bevorzugte Härter sind Polycarbonsäureanhydride.

Dabei kann es sich um lineare aliphatische polymere Anhydride, wie beispielsweise Polysebacinsäurepolyanhydrid oder Polyazelainsäurepolyanhydrid, oder cyclische Carbonsäureanhydride handeln.

Cyclische Carbonsäureanhydride sind besonders bevorzugt.

Beispiele für cyclische Carbonsäureanhydride sind:
Bernsteinsäureanhydrid, Citraconsäureanhydrid, Itaconsäureanhydrid, alkenyl-substituierte Bernsteinsäureanhydride, Dodecenylbernsteinsäureanhydrid, Maleinsäureanhydrid und Tricarballylsäureanhydrid, Maleinsäureanhydridaddukt an Cyclopentadien oder Methylcyclopentadien, Linolsäureaddukt an Maleinsäureanhydrid, alkylierte Endoalkylentetrahydrophthalsäureanhydride, Methyltetrahydrophthalsäureanhydrid, Tetrahydrophthalsäureanhydrid; wobei von den beiden letzteren die Isomerengemische besonders geeignet sind. Ebenfalls bevorzugt sind Hexahydrophthalsäureanhydrid und Methylhexahydrophthalsäureanhydrid.

Weitere Beispiele für cyclische Carbonsäureanhydride sind aromatische Anhydride wie beispielsweise Pyromellitsäuredianhydrid, Trimellitsäureanhydrid und Phthalsäureanhydrid.

Auch chlorierte oder bromierte Anhydride, wie z.B. Tetrachlorphthalsäureanhydrid, Tetrabromphthalsäureanhydrid, Dichlormaleinsäureanhydrid und Chlorendic-Anhydrid, können eingesetzt werden.

Ebenfalls als Härter geeignet sind die von den oben erwähnten Carbonsäureanhydriden abgeleiteten Carbonsäuren mit mindestens zwei Carboxylgruppen pro Molekül oder mindestens einer Carboxylgruppe und einer Anhydridgruppe pro Molekül. Ein weiterer geeigneter Härter ist Dicyandiamid.

Das Mengenverhältnis der Komponenten (a) und (b) kann in den erfindungsgemässen Zusammensetzungen in weiten Bereichen variieren. Das optimale Verhältnis ist u.a. abhängig vom Amintyp und Amingehalt des Mikrogel-Amin-Salzes und kann vom Fachmann leicht ermittelt werden.

Wenn das Mikrogel-Amin-Salz als Härter eingesetzt wird, beträgt das Gewichtsverhältnis der Komponenten (a) : (b) zweckmässig 1 : 5 bis 500 1, vorzugsweise 1 : 2 bis 200 1 und besonders bevorzugt 1 : 1 bis 100 : 1.

Bei der Verwendung des Mikrogel-Amin-Salzes als Beschleuniger sind schon wesentlich geringere Mengen wirksam. Das Gewichtsverhältnis der Komponenten (a) : (b) beträgt in diesem Fall zweckmässig 1 : 2 bis 2000 : 1, vorzugsweise 1 : 1 bis 1000 : 1 und besonders bevorzugt 2 : 1 bis 1000 : 1.

Die erfindungsgemässen Zusammensetzungen können gegebenenfalls weitere Beschleuniger, wie zum Beispiel Imidazole oder Benzyldimethylamin, enthalten.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere.
Geeignete Zähigkeitsvermittler sind beispielsweise in der EP-A-449 776 beschrieben.

Ausserdem können die härtbaren Mischungen Füllstoffe enthalten, wie beispielsweise Metallpulver, Holzmehl, Glaspulver, Glaskugeln, Halbmetall- und Metalloxide, wie zum Beispiel SiO₂ (Aerosile, Quarz, Quarzmehl, Quarzgutmehl), Korund und Titanoxid, Halbmetall- und Metallnitride, wie zum Beispiel Siliziumnitrid, Bornitrid und Aluminiumnitrid, Halbmetall- und Metallcarbide (SiC), Metallcarbonate (Dolomit, Kreide, CaCO₃), Metallsulfate (Baryt, Gips), Gesteinsmehle und natürliche oder synthetische Mineralien hauptsächlich aus der Silikatreihe, wie zum Beispiel Zeolithe (insbesondere Molekularsiebe) Talkum, Glimmer, Kaolin,Wollastonit, Bentonit und andere.

Neben den oben erwähnten Additiven können die härtbaren Gemische weitere übliche Zusatzstoffe enthalten, wie z.B. Antioxidantien, Lichtschutzmittel, Weichmacher, Farbstoffe, Pigmente, Thixotropiemittel, Zähigkeitsverbesserer, Entschäumer, Antistatika, Gleitmittel und Entformungshilfsmittel.

Die erfindungsgemässen Zusammensetzungen können nach bekannten Methoden mit Hilfe bekannter Mischaggregate, wie beispielsweise Rührer, Kneter, Walzen oder Trockenmischern, hergestellt werden. Im Falle von festen Epoxidharzen kann die Dispergierung auch in der Schmelze erfolgen. Die Temperatur bei der Dispergierung soll so gewählt werden, dass während des Mischvorgangs keine vorzeitige Härtung eintritt. Die optimalen Härtungsbedingungen sind abhängig vom Mikrogel, von der Art und Menge des der stickstoffhaltigen Base, vom Epoxidharz und von der Dispergierungsform und können vom Fachmann in jedem Fall mit bekannten Methoden bestimmt werden.

Wenn Komponente (b) als Feststoff vorliegt, wird das Mikrogel-Amin-Salz mittels bekannter Methoden, wie z.B. durch einfaches Rühren oder durch Rühren unter Zuhilfenahme von Glaskugeln, im Epoxidharz (a) oder in einer Lösung des Epoxidharzes (a) dispergiert. Dabei wird zweckmässig unterhalb der Temperatur gearbeitet, bei der die Reaktion des Mikrogel-Amin-Salzes mit dem Epoxidharz einsetzt. Vorzugsweise wird bei Temperaturen unterhalb von 60 °C gearbeitet.

Wenn Komponente (b) als Suspension in Wasser oder einem Lösungsmittel vorliegt, wird diese Suspension zunächst mit dem Epoxidharz gemischt. Anschliessend wird das Wasser oder das Lösungsmittel mittels bekannter Methoden, wie z.B. Destillation oder Gefriertrocknung, entfernt. Dabei wird zweckmässig unterhalb der Temperatur gearbeitet, bei der die Reaktion des Mikrogel-Amin-Salzes mit dem Epoxidharz einsetzt. Vorzugsweise wird bei Temperaturen unterhalb von 60 °C gearbeitet.

Wenn Komponente (b) als Beschleuniger verwendet wird, kann das Mikrogel-Amin-Salz auch im Härter (c) dispergiert werden.

Die Härtung der erfindungsgemässen Epoxidharzzusammensetzungen zu Formkörpern, Beschichtungen oder dergleichen erfolgt in für die Epoxidharztechnik üblicher Weise, wie sie beispielsweise im "Handbook of Epoxy Resins", 1967, von H. Lee und K.Neville beschrieben wird.

Aufgrund der hohen Latenz der erfindungsgemässen Mikrogel-Amin-Salze weisen die härtbaren Zusammensetzungen eine hohe Lagerstabilität und eine lange Gebrauchsdauer auf sowie eine hohe Beständigkeit gegenüber starken mechanischen Einwirkungen (Scherbelastung, Druckbelastung).

Die erfindungsgemässen Zusammensetzungen eignen sich ausgezeichnet als Giessharze, Laminierharze, Klebstoffe, Pressmassen, Beschichtungsmassen sowie als Umhüllungssysteme für elektrische und elektronische Bauteile, insbesondere als Giessharze, Laminierharze oder Klebstoffe.

Gegenstand vorliegender Erfindung sind auch die aus den erfindungsgemässen Zusammensetzungen hergestellten vernetzten Produkte, wie beispielsweise Formstoffe, Beschichtungen oder Verklebungen.

### Beispiele:

### I. Herstellung von Carbonsäuregruppen enthaltenden Mikrogelen

### Beispiel I.1.: Mikrogel aus Methacrylsäure, Ethylacrylat, Methylmethacrylat, Ethylenglykoldimethacrylat und Trimethylolpropantrimethacrylat

Zunächst wird eine Monomermischung aus 21 g Methacrylsäure, 15 g Ethylacrylat, 12 g Methylmethacrylat, 6 g Ethylenglykoldimethacrylat und 6 g Trimethylolpropantrimethacrylat hergestellt.
In einem Sulfierkolben, der mit Glasankerrührer, Thermometer, Gasanschluss und Dosierungsanschluss ausgerüstet ist, werden 1,8 g Natriumdodecylsulfat und 320 g deionisiertes Wasser unter Stickstoff gerührt (ca. 200 U/min) und auf 65 °C (Innentemperatur) aufgeheizt. Anschliessend werden 6 ml der oben angegebenen Monomermischung und eine Lösung aus 0,026 g Ammoniumpersulfat in 20 ml deionisiertem Wasser zugegeben. Das so erhaltene Gemisch wird auf 70 °C aufgeheizt, und nach 15 min Rühren bei 70 °C wird der Rest der Monomermischung innerhalb von 1 h 45 min hinzugegeben. Nach 2 h Rühren bei 70 °C wird eine Lösung von 0,078 g Ammoniumpersulfat in 2 g deionisiertem Wasser zugegeben, und das Reaktionsgemisch wird weitere 4 h bei 70 °C gerührt. Nach Abkühlen auf Raumtemperatur wird der Inhalt des Reaktionsgefässes durch ein Papierfilter filtriert. Die so erhaltene Emulsion hat einen Festkörpergehalt von 13,8 % und einen Säuregehalt von 0,60 mol/kg und kann direkt mit einem Amin oder Imidazol zu einem erfindungsgemässen Mikrogel-Amin-Salz umgesetzt werden.

### Beispiel I.2.: Mikrogel aus Methacrylsäure, Ethylacrylat, Methylmethacrylat, Ethylenglykoldimethacrylat und Trimethylolpropantrimethacrylat

Zunächst wird eine Monomermischung aus 57,6 g Methacrylsäure, 48 g Ethylacrylat, 86,4 g Methylmethacrylat, 24 g Ethylenglykoldimethacrylat und 24 g Trimethylolpropantrimethacrylat hergestellt.
In einem Sulfierkolben, der mit Glasankerrührer, Thermometer, Gasanschluss und Dosierungsanschluss ausgerüstet ist, werden 7,2 g Natriumdodecylsulfat und 1280 g deionisiertes Wasser unter Stickstoff gerührt (ca. 200 U/min) und auf 65 °C (Innentemperatur) aufgeheizt. Anschliessend werden 24 ml der oben angegebenen Monomermischung und eine Lösung aus 0,104 g Ammoniumpersulfat in 80 ml deionisiertem Wasser zugegeben. Das so erhaltene Gemisch wird auf 70 °C aufgeheizt, und nach 15 min Rühren bei 70 °C wird der Rest der Monomermischung innerhalb von ca. 2 h hinzugegeben. Nach 2 h Rühren bei 70 °C wird eine Lösung von 0,312 g Ammoniumpersulfat in 8 g deionisiertem Wasser zugegeben, und das Reaktionsgemisch wird weitere 6 h bei 70 °C gerührt. Nach Abkühlen auf Raumtemperatur wird der Inhalt des Reaktionsgefässes durch ein Papierfilter filtriert. Die so erhaltene Emulsion hat einen Festkörpergehalt von 14,2 % und einen Säuregehalt von 0,45 mol/kg und kann direkt mit einem Amin oder Imidazol zu einem erfindungsgemässen Mikrogel-Amin-Salz umgesetzt werden.

### Beispiel I.3.: Mikrogel aus Methacrylsäure, Methylmethacrylat, Ethylenglykoldimethacrylat und Trimethylolpropantrimethacrylat

Zunächst wird eine Monomermischung aus 14,4 g Methacrylsäure, 33,6 g Methylmethacrylat, 6 g Ethylenglykoldimethacrylat und 6 g Trimethylolpropantrimethacrylat hergestellt.
In einem Sulfierkolben, der mit Glasankerrührer, Thermometer, Gasanschluss und Dosierungsanschluss ausgerüstet ist, werden 1,8 g Natriumdodecylsulfat und 320 g deionisiertes Wasser unter Stickstoff gerührt (ca. 200 U/min) und auf 65 °C (Innentemperatur) aufgeheizt. Anschliessend werden 6 ml der oben angegebenen Monomermischung und eine Lösung aus 0,026 g Ammoniumpersulfat in 20 ml deionisiertem Wasser zugegeben. Das so erhaltene Gemisch wird auf 70 °C aufgeheizt, und nach 15 min Rühren bei 70 °C wird der Rest der Monomermischung innerhalb von ca. 1 h hinzugegeben. Nach 2 h Rühren bei 70 °C wird eine Lösung von 0,026 g Ammoniumpersulfat in 2 g deionisiertem Wasser zugegeben, und das Reaktionsgemisch wird weitere 6 h bei 70 °C gerührt. Nach Abkühlen auf Raumtemperatur wird der Inhalt des Reaktionsgefässes durch ein Papierfilter filtriert. Die so erhaltene Emulsion hat einen Festkörpergehalt von 14,0 % und einen Säuregehalt von 0,41 mol/kg und kann direkt mit einem Amin oder Imidazol zu einem erfindungsgemässen Mikrogel-Amin-Salz umgesetzt werden.

### Beispiel I.4.: Mikrogel aus Methacrylsäure, Methylmethacrylat, Ethylenglykoldimethacrylat, Trimethylolpropantrimethacrylat und Silicondiacrylat

Zunächst werden eine Monomermischung aus 15,66 g Methacrylsäure, 38,82 g Methylmethacrylat, 6,47 g Ethylenglykoldimethacrylat, 6,47 g Trimethylolpropantrimethacrylat und 0,68 g Silicondiacrylat (Ebecryl® 350 von Radcure Specialties) und eine Initiatorlösung von 0,1 g Natriumpersulfat in 10 g deionisiertem Wasser hergestellt. In einem Sulfierkolben, der mit Glasankerrührer, Thermometer, Gasanschluss und Dosierungsanschluss ausgerüstet ist, werden 2,07 g Natriumdodecylsulfat und 388 g deionisiertes Wasser unter Stickstoff gerührt (ca. 200 U/min) und auf 60 °C (Innentemperatur) aufgeheizt. Anschliessend werden 6,8 ml der oben angegebenen Monomermischung und 3 ml der Initiatorlösung zugegeben. Das so erhaltene Gemisch wird auf 65 °C aufgeheizt, und nach 15 min Rühren bei 65 °C wird der Rest der Monomermischung innerhalb von ca. 1 h hinzugegeben. Nach 2 h Rühren bei 65 °C werden 1 ml und nach weiteren 3 h weitere 2 ml der Initiatorlösung zugegeben. Das Reaktionsgemisch wird weitere 2,75 h bei 65 °C gerührt. Nach Abkühlen auf Raumtemperatur wird der Inhalt des Reaktionsgefässes durch ein Papierfilter filtriert. Die so erhaltene Emulsion hat einen Festkörpergehalt von 14,3 % und einen Säuregehalt von 0,402 mol/kg und kann direkt mit einem Amin oder Imidazol zu einem erfindungsgemässen Mikrogel-Amin-Salz umgesetzt werden.

### II. Herstellung von Mikrogel-Amin-Salzen

### Beispiel II.1.:

Zu 100 g der nach Beispiel I.1. hergestellten wässrigen Emulsion wird unter Rühren eine Lösung von 5,95 g 2-Ethyl-4-methylimidazol in 110 ml Isopropanol zugegeben. Die so erhaltene Emulsion eines Mikrogel-lmidazol-Salzes (Partikelgrösse: 180 nm) wird sprühgetrocknet (Inlet-Temperatur: 132 °C, Outlet-Temperatur: 72-76 °C). Das getrocknete Mikrogel-Imidazol-Pulver weist einen Amingehalt von 2,55 mol/kg und einen Säuregehalt von 2,97 mol/kg auf. Die Thermogravimetrische Analyse (TGA) zeigt einen beginnenden Gewichtsverlust bei 182 °C (Onset-Temperatur).

### Beispiel II.2.:

Zu 100 g der nach Beispiel 1.2. hergestellten wässrigen Emulsion wird unter Rühren eine Lösung von 4,63 g 2-Ethyl-4-methylimidazol in 40 g Isopropanol und 40 g deionisiertem Wasser zugegeben. Die so erhaltene Emulsion eines Mikrogel-Imidazol-Salzes (Partikelgrösse: ca. 65 nm) wird sprühgetrocknet (Inlet-Temperatur: 132 °C, Outlet-Temperatur: 62-73 °C). Das getrocknete Mikrogel-Imidazol-Pulver weist einen Amingehalt von 2,05 mol/kg und einen Säuregehalt von 2,24 mol/kg auf. Die TGA zeigt einen beginnenden Gewichtsverlust bei 180 °C (Onset-Temperatur).

### Beispiel II.3.:

Zu 100 g der nach Beispiel I.1. hergestellten wässrigen Emulsion wird unter Rühren eine Lösung von 7,78 g 2-Phenylimidazol in 110 g Isopropanol zugegeben. Die Mischung wird bis zur Auflösung des Niederschlags bei Raumtemperatur gerührt. Die so erhaltene Emulsion eines Mikrogel-Imidazol-Salzes wird sprühgetrocknet (Inlet-Temperatur: 132 °C, Outlet-Temperatur: 62-72 °C). Das getrocknete Mikrogel-lmidazol-Pulver weist einen Amingehalt von 2,30 mol/kg und einen Säuregehalt von 2,62 mol/kg auf. Die TGA zeigt einen beginnenden Gewichtsverlust bei 232 °C (Onset-Temperatur).

### Beispiel II.4.:

Zu 100 g der nach Beispiel I.1. hergestellten wässrigen Emulsion wird unter Rühren eine Lösung von 10,1 g 1-Benzyl-2-methylimidazol in 110 g Isopropanol zugegeben. Die Mischung wird bis zur Auflösung des Niederschlags bei Raumtemperatur gerührt. Die so erhaltene Emulsion eines Mikrogel-lmidazol-Salzes wird sprühgetrocknet (Inlet-Temperatur: 132 °C, Outlet-Temperatur: 59-62 °C). Das getrocknete Mikrogel-Imidazol-Pulver weist einen Amingehalt von 2,13 mol/kg und einen Säuregehalt von 2,56 mol/kg auf.

### Beispiel II.5.:

Zu 200 g der nach Beispiel 1.3. hergestellten wässrigen Emulsion wird unter Rühren eine Lösung von 8,36 g 2-Ethyl-4-methylimidazol in 30 g Isopropanol und 30 g deionisiertem Wasser zugegeben. Die so erhaltene Emulsion eines Mikrogel-Imidazol-Salzes (Partikelgrösse: ca. 130 nm) wird sprühgetrocknet (Inlet-Temperatur: 132 °C, Outlet-Temperatur: 69-72 °C). Das getrocknete Mikrogel-Imidazol-Pulver weist einen Amingehalt von 2,12 mol/kg und einen Säuregehalt von 2,47 mol/kg auf. Die TGA zeigt einen beginnenden Gewichtsverlust bei 182 °C (Onset-Temperatur).

### Beispiel II.6.:

Zu 100 g der nach Beispiel I.4. hergestellten wässrigen Emulsion wird unter Rühren eine Lösung von 8,42 g 2-Ethyl-4-methylimidazol in 20 g Isopropanol zugegeben. Die so erhaltene Emulsion eines Mikrogel-lmidazol-Salzes wird sprühgetrocknet (Inlet-Temperatur: 132 °C, Outlet-Temperatur: 80 °C). Das Mikrogel-Imidazol-Pulver wird anschliessend 8 h bei 45 °C im Vakuum (200 Torr, 26660 Pa) getrocknet und weist einen Amingehalt von 1,96 mol/kg und einen Säuregehalt von 2,04 mol/kg auf.

### III. Applikationsbeispiele

### Beispiel III.1.:

10,46 g des nach Beispiel II.1. hergestellten Mikrogel-Imidazol-Pulvers wird zu 120 g eines flüssigen Epoxidharzgemisches aus Bisphenol A-diglycidylether und Bisphenol F-diglycidylether mit einem Epoxidgehalt von 5,3 mol/kg zugegeben und mittels Dispermat mit Glaskugeln bei 2000 U/min (<40 °C) während 30 min dispergiert. Die so erhaltene Mischung weist bei 40 °C eine Viskosität von 1560 mPa • s auf. Die Viskosität verdoppelt sich nach 12,5 d Lagerung bei 40 °C und nach 90 d Lagerung bei Raumtemperatur.
Die in Abhängigkeit von der Temperatur gemessenen Gelierzeiten sind in Tabelle 1 angegeben.

### Beispiel III.2.

Analog zu Beispiel III.1. wird eine Mischung aus 10 g des nach Beispiel II.2. hergestellten Mikrogel-Imidazol-Pulvers und 90 g eines flüssigen Epoxidharzgemisches aus Bisphenol A-diglycidylether und Bisphenol F-diglycidylether mit einem Epoxidgehalt von 5,3 mol/kg hergestellt. Die Mischung weist bei 40 °C eine Viskosität von 1520 mPa • s auf. Die Viskosität verdoppelt sich nach 8 d Lagerung bei 40 °C.
Die in Abhängigkeit von der Temperatur gemessenen Gelierzeiten sind in Tabelle 1 angegeben.

### Beispiel III.3.

Analog zu Beispiel III.1. wird eine Mischung aus 10,63 g des nach Beispiel II.3. hergestellten Mikrogel-lmidazol-Pulvers und 110 g eines flüssigen Epoxidharzgemisches aus Bisphenol A-diglycidylether und Bisphenol F-diglycidylether mit einem Epoxidgehalt von 5,3 mol/kg hergestellt. Die Mischung weist bei 40 °C eine Viskosität von 1190 mPa • s auf. Die Viskosität verdoppelt sich nach 15 d Lagerung bei 40 °C.
Die in Abhängigkeit von der Temperatur gemessenen Gelierzeiten sind in Tabelle 1 angegeben.

### Beispiel III.4.

Analog zu Beispiel III.1. wird eine Mischung aus 9,4 g des nach Beispiel II.4. hergestellten Mikrogel-Imidazol-Pulvers und 90 g eines flüssigen Epoxidharzgemisches aus Bisphenol A-diglycidylether und Bisphenol F-diglycidylether mit einem Epoxidgehalt von 5,3 mol/kg hergestellt. Die Mischung weist bei 40 °C eine Viskosität von 1280 mPa • s auf. Die Viskosität verdoppelt sich nach 5 d Lagerung bei 40 °C.
Die in Abhängigkeit von der Temperatur gemessenen Gelierzeiten sind in Tabelle 1 angegeben.

### Beispiel III.5.:

20 g des nach Beispiel II.3. hergestellten Mikrogel-Imidazol-Pulvers wird zu 80 g eines flüssigen Epoxidharzgemisches (Epoxidgehalt: 5,1 mol/kg), hergestellt durch Mischen von 91 g Bisphenol A-diglycidylether und 9 g Polypropylenglykol(400)-diglycidylether, hinzugegeben und mittels Dispermat mit Glaskugeln bei 2000 U/min (<40 °C) während 30 min dispergiert. 10 g der so erhaltenen Mischung wird mit 70 g eines flüssigen Epoxidharzgemisches (Epoxidgehalt: 5,1 mol/kg), hergestellt durch Mischen von 91 g Bisphenol A-diglycidylether und 9 g Polypropylenglykol(400)-diglycidylether, verdünnt und zu 66 g Methyltetrahydrophthalsäureanhydrid gegeben. Diese ungefüllte Harz/Härter/Beschleuniger-Mischung weist bei 40 °C eine Viskosität von 150 mPa • s auf. Die Viskosität verdoppelt sich nach 19 h Lagerung bei 40 °C.
60 g Quarzmehl W12 EST wird zu 40 g der ungefüllten Harz/Härter/Beschleuniger-Mischung gegeben und mittels Dispermat mit Glaskugeln bei 1000 U/min (<25 °C) gemischt. Diese mit Quarzmehl gefüllte Harz/Härter/Beschleuniger-Mischung weist bei 40 °C eine Viskosität von 8800 mPa • s auf. Die Viskosität verdoppelt sich nach 20 h Lagerung bei 40 °C.
Die in Abhängigkeit von der Temperatur gemessenen Gelierzeiten sind in Tabelle 1 angegeben.

### Beispiel III.6.:

7 g des nach Beispiel II.5. hergestellten Mikrogel-Imidazol-Pulvers wird zu 63 g eines flüssigen Epoxidharzgemisches (Epoxidgehalt: 5,1 mol/kg), hergestellt durch Mischen von 91 g Bisphenol A-diglycidylether und 9 g Polypropylenglykol(400)-diglycidylether, hinzugegeben und mittels Dispermat mit Glaskugeln bei 2000 U/min (<40 °C) während 30 min dispergiert. 24 g der so erhaltenen Mischung wird mit 56 g eines flüssigen Epoxidharzgemisches (Epoxidgehalt: 5,1 mol/kg), hergestellt durch Mischen von 91 g Bisphenol A-diglycidylether und 9 g Polypropylenglykol(400)-diglycidylether, verdünnt und zu 66 g Methyltetrahydrophthalsäureanhydrid gegeben. Diese ungefüllte Harz/Härter/Beschleuniger-Mischung weist bei 40 °C eine Viskosität von 152 mPa • s auf. Die Viskosität verdoppelt sich nach 48 h Lagerung bei 40 °C.
60 g Quarzmehl W12 EST wird zu 40 g der ungefüllten Harz/Härter/Beschleuniger-Mischung gegeben und mittels Dispermat mit Glaskugeln bei 1000 U/min (<25 °C) gemischt. Diese mit Quarzmehl gefüllte Harz/Härter/Beschleuniger-Mischung weist bei 40 °C eine Viskosität von 5000 mPa • s auf. Die Viskosität verdoppelt sich nach 46 h Lagerung bei 40 °C.
Die in Abhängigkeit von der Temperatur gemessenen Gelierzeiten sind in Tabelle 1 angegeben.

### Beispiel III.7.:

10,0 g des nach Beispiel II.6. hergestellten Mikrogel-Imidazol-Pulvers wird zu 100 g eines flüssigen Epoxidharzgemisches (Epoxidgehalt: 5,1 mol/kg), hergestellt durch Mischen von 91 g Bisphenol A-diglycidylether und 9 g Polypropylenglykol(400)-diglycidylether, zugegeben und mittels Dispermat mit Glaskugeln bei 2000 U/min (<40 °C) während 30 min dispergiert. 13,2 g der so erhaltenen Zusammensetzung wird mit 26,8 g eines flüssigen Epoxidharzgemisches (Epoxidgehalt: 5,1 mol/kg), hergestellt durch Mischen von 91 g Bisphenol A-diglycidylether und 9 g Polypropylenglykol(400)-diglycidylether, verdünnt und zu 33 g Methyltetrahydrophthalsäureanhydrid hinzugegeben. Diese ungefüllte Harz/Härter/Beschleuniger-Mischung weist bei 40 °C eine Viskosität von 145 mPa • s auf. Die Viskosität verdoppelt sich nach 85 h Lagerung bei 40 °C.
Die in Abhängigkeit von der Temperatur gemessenen Gelierzeiten sind in Tabelle 1 angegeben.

**Tabelle 1:**

| Gelierzeiten [s] bei verschiedenen Temperaturen | | | | | | |
|---|---|---|---|---|---|---|
| Beispiel | 100 °C | 120 °C | 130 °C | 140 °C | 150 °C | 160 °C |
| III.1. | > 6000 | 893 | 305 | 150 | 102 | 71 |
| III.2. | 4800 | 295 | 170 | 109 | 77 | 58 |
| III.3. | 2400 | 400 | 258 | 155 | 132 | 83 |
| III.4. | 922 | 245 | 161 | 119 | 87 | 68 |
| III.5. | 2520 | 740 | 445 | 270 | 164 | 108 |
| III.6. | 4700 | 793 | 440 | 253 | 154 | 96 |
| III.7 | 4800 | 943 | 526 | 300 | 182 | 113 |

## Patentansprüche

1. Reaktionsprodukt aus einem Carbonsäuregruppen enthaltenden Mikrogel und einer stickstoffhaltigen Base in Form eines festen Pulvers, wobei die Anzahl der Carbonsäuregruppen im Produkt gleich gross oder grösser ist als die Anzahl der basischen Stickstoffatome.

2. Reaktionsprodukt nach Anspruch 1, **dadurch gekennzeichnet, dass** das Mikrogel ein Copolymer aus mindestens einer ungesättigten Carbonsäure und mindestens einem mehrfunktionellen Vemetzer ist.

3. Reaktionsprodukt nach Anspruch 1, **dadurch gekennzeichnet, dass** das Mikrogel ein Copolymer aus mindestens einer ungesättigten Carbonsäure, mindestens einem carbonsäuregruppenfreien Vinylmonomer und mindestens einem mehrfunktionellen Vernetzer ist.

4. Reaktionsprodukt nach Anspruch 2 oder 3, **dadurch gekennzeichnet, dass** die ungesättigte Carbonsäure ausgewählt wird aus Acrylsäure, Methacrylsäure, 2-Carboxyethylacrylat, 2-Carboxyethylmethacrylat, Phthalsäuremono(2-acryloylethyl)ester, Phthalsäuremono(2-methacryloylethyl)ester, Maleinsäure, Maleinsäuremonomethylester, Maleinsäuremonoethylester, Fumarsäure, Fumarsäuremonomethylester, Fumarsäuremonoethylester, Itaconsäure, Zimtsäure, Crotonsäure, 4-Vinylcyclohexancarbonsäure, 4-Vinylphenylessigsäure und p-Vinylbenzoesäure.

5. Reaktionsprodukt nach Anspruch 2 oder 3, **dadurch gekennzeichnet, dass** die ungesättigte Carbonsäure Acrylsäure oder Methacrylsäure ist.

6. Reaktionsprodukt nach Anspruch 2 oder 3, **dadurch gekennzeichnet, dass** der mehrfunktionelle Vemetzer ein polyfunktioneller Acrylsäureester oder Methacrylsäureester eines aliphatischen, cycloaliphatischen oder aromatischen Polyols, ein Additionsprodukt von Acrylsäure oder Methacrylsäure und einer Polyglycidylverbindung, ein Additionsprodukt von Acrylsäure oder Methacrylsäure und Glycidylacrylat oder -methacrylat, ein Acrylsäurealkenylester oder Methacrylsäurealkenylester, ein Dialkenylcyclohexan oder ein Dialkenylbenzol ist.

7. Reaktionsprodukt nach Anspruch 2 oder 3, **dadurch gekennzeichnet, dass** der mehrfunktionelle Vernetzer ausgewählt wird aus Ethylenglykoldiacrylat, Ethylenglykoldimethacrylat, Propylenglykoldiacrylat, Propylenglykoldimethacrylat, 1,4-Butandioldiacrylat, 1,4-Butandioldimethacrylat, Polyethylenglykoldiacrylat, Polyethylenglykoldimethacrylat, Polypropylenglykoldiacrylat, Polypropylenglykoldimethacrylat, 1,1,1-Trimethylolpropantriacrylat, 1,1,1-Trimethylolpropantrimethacrylat, Bisphenol-A-diglycidyletherdiacrylat, Bisphenol-A-diglycidyletherdimethacrylat, Acrylsäureallylester, Methacrylsäureallylester, Divinylcyclohexan oder Divinylbenzol.

8. Reaktionsprodukt nach Anspruch 3, **dadurch gekennzeichnet, dass** das carbonsäuregruppenfreie Vinylmonomer ein Alkylester, Hydroxyalkylester oder Glycidylester einer ungesättigten Carbonsäure oder ein Styrolderivat ist.

9. Reaktionsprodukt nach Anspruch 3, **dadurch gekennzeichnet, dass** das carbonsäuregruppenfreie Vinylmonomer Methylacrylat, Methylmethacrylat, Ethylacrylat, Ethylmethacrylat, 2-Hydroxyethylacrylat, 2-Hydroxyethylmethacrylat, Butylacrylat, Butylmethacrylat, 2-Ethylhexylacrylat, 2-Ethylhexylmethacrylat oder Styrol ist.

10. Reaktionsprodukt nach Anspruch 1, **dadurch gekennzeichnet, dass** das Mikrogel ein Copolymer aus 2-70 Gew.-% mindestens einer ungesättigten Carbonsäure, 0-96 Gew.-% mindestens eines carbonsäuregruppenfreien Vinylmonomers und 2-70 Gew.-% mindestens eines mehrfunktionellen Vernetzers ist.

11. Reaktionsprodukt nach Anspruch 1, **dadurch gekennzeichnet, dass** die stickstoffhaltige Base ein Amin, ein Polyamin oder ein Imidazol ist.

12. Reaktionsprodukt nach Anspruch 1, **dadurch gekennzeichnet, dass** die stickstoffhaltige Base ein Amin oder Imidazol der Formeln I, II oder III ist
NR₁R₂R₃ (I),
R₄R₅N-A-NR₆R₇ (II) 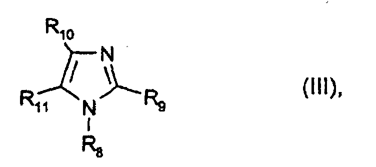
worin R₁ bis R₇ unabhängig voneinander Wasserstoff, C₁-C₁₂-Alkyl, unsubstituiertes oder substituiertes Phenyl, Benzyl, Phenylethyl, Cyclopentyl oder Cyclohexyl bedeuten, oder R₂ und R₃ oder R₄ und R₅ oder R₆ und R₇ zusammen Tetramethylen, Pentamethylen, -(CH₂)₂-O-(CH₂)₂- oder -(CH₂)₂-NH-(CH₂)₂- darstellen,
A für C₁-C₃₀-Alkandiyl steht,
R₈ bis R₁₁ unabhängig voneinander Wasserstoff, C₁-C₁₈-Alkyl, Phenyl oder Benzyl bedeuten oder R₈ und R₉ oder R₈ und R₁₁ oder R₁₀ und R₁₁ zusammen Tetramethylen, Pentamethylen, -(CH₂)₂-O-(CH₂)₂- oder -(CH₂)₂-NH-(CH₂)₂- darstellen.

13. Reaktionsprodukt nach Anspruch 1, **dadurch gekennzeichnet, dass** die stickstoffhaltige Base 2-Phenylimidazol, 2-Isopropylimidazol, 2-Dodecylimidazol, 2-Heptadecylimidazol oder 2-Ethyl-4-methylimidazol ist.

14. Verfahren zur Herstellung eines Reaktionsproduktes nach Anspruch 1, **dadurch gekennzeichnet, dass** ein Carbonsäuregruppen enthaltendes Mikrogel mit einer stickstoffhaltigen Base bei einer Temperatur von 0 °C bis 200 °C vorzugsweise in Lösung umgesetzt wird, wobei die Edukte in solchen Mengen eingesetzt werden, dass die Anzahl der Carbonsäuregruppen gleich gross oder grösser ist als die Anzahl der basischen Stickstoffatome, und das Reaktionsprodukt in Form eines festen Pulvers mittels Sprühtrocknung, Lyophilisation oder anderen bekannten Methoden isoliert wird.

15. Zusammensetzung enthaltend
(a) ein Epoxidharz mit durchschnittlich mehr als einer 1,2-Epoxidgruppe pro Molekül und
(b) ein Reaktionsprodukt nach Anspruch 1.

16. Zusammensetzung nach Anspruch 15, enthaltend zusätzlich
(c) einen von der Komponente (b) verschiedenen Härter für das Epoxidharz (a).

17. Zusammensetzung nach Anspruch 15, enthaltend als Epoxidharz (a) einen Bisphenol A-diglycidylether oder einen Bisphenol F-diglycidylether.

18. Zusammensetzung nach Anspruch 16, enthaltend ein Polycarbonsäureanhydrid als Härter (c).

19. Zusammensetzung nach Anspruch 15, worin das Gewichtsverhältnis der Komponenten (a) : (b) 1 : 5 bis 500 : 1 beträgt.

20. Zusammensetzung nach Anspruch 16, worin das Gewichtsverhältnis der Komponenten (a) : (b) 1 : 2 bis 2000 : 1 beträgt.

21. Vernetzte Produkte erhältlich durch Härtung einer Zusammensetzung nach Anspruch 15.

## Claims

1. A reaction product of a microgel that contains carboxylic acid groups with a nitrogen-containing base in the form of a solid powder, whereby the number of carboxylic acid groups in the product is equal to or greater than the number of basic nitrogen atoms.

2. A reaction product according to claim 1, wherein the microgel is a copolymer of at least one unsaturated carboxylic acid and at least one multifunctional cross-linker.

3. A reaction product according to claim 1, wherein the microgel is a copolymer of at least one unsaturated carboxylic acid, at least one vinyl monomer that contains no carboxylic acid groups and at least one multifunctional cross-linker.

4. A reaction product according to either claim 2 or claim 3, wherein the unsaturated carboxylic acid is selected from acrylic acid, methacrylic acid, 2-carboxyethyl acrylate, 2-carboxyethyl methacrylate, phthalic acid mono(2-acryloylethyl) ester, phthalic acid mono(2-methacryloylethyl) ester, maleic acid, maleic acid monomethyl ester, maleic acid monoethyl ester, fumaric acid, fumaric acid monomethyl ester, fumaric acid monoethyl ester, itaconic acid, cinnamic acid, crotonic acid, 4-vinylcyclohexanecarboxylic acid, 4-vinylphenylacetic acid and p-vinylbenzoic acid.

5. A reaction product according to either claim 2 or claim 3, wherein the unsaturated carboxylic acid is acrylic acid or methacrylic acid.

6. A reaction product according to either claim 2 or claim 3, wherein the multifunctional cross-linker is a polyfunctional acrylic acid ester or methacrylic acid ester of an aliphatic, cycloaliphatic or aromatic polyol, an addition product of acrylic acid or methacrylic acid and a polyglycidyl compound, an addition product of acrylic acid or methacrylic acid and glycidyl acrylate or methacrylate, an acrylic acid alkenyl ester or methacrylic acid alkenyl ester, a dialkenylcyclohexane or a dialkenylbenzene.

7. A reaction product according to either claim 2 or claim 3, wherein the multifunctional cross-linker is selected from ethylene glycol diacrylate, ethylene glycol dimethacrylate, propylene glycol diacrylate, propylene glycol dimethacrylate, 1,4-butanediol diacrylate, 1,4-butanediol dimethacrylate, polyethylene glycol diacrylate, polyethylene glycol dimethacrylate, polypropylene glycol diacrylate, polypropylene glycol dimethacrylate, 1,1,1-trimethylolpropane triacrylate, 1,1,1-trimethylolpropane trimethacrylate, diglycidyl ether diacrylate of bisphenol A, diglycidyl ether dimethacrylate of bisphenol A, acrylic acid allyl ester, methacrylic acid allyl ester, divinylcyclohexane and divinylbenzene.

8. A reaction product according to claim 3, wherein the vinyl monomer that contains no carboxylic acid groups is an alkyl ester, hydroxyalkyl ester or glycidyl ester of an unsaturated carboxylic acid or is a styrene derivative.

9. A reaction product according to claim 3, wherein the vinyl monomer that contains no carboxylic acid groups is methyl acrylate, methyl methacrylate, ethyl acrylate, ethyl methacrylate, 2-hydroxyethyl acrylate, 2-hydroxyethyl methacrylate, butyl acrylate, butyl methacrylate, 2-ethylhexyl acrylate, 2-ethylhexyl methacrylate or styrene.

10. A reaction product according to claim 1, wherein the microgel is a copolymer of from 2 to 70 % by weight of at least one unsaturated carboxylic acid, from 0 to 96 % by weight of at least one vinyl monomer that contains no carboxylic acid groups and from 2 to 70 % by weight of at least one multifunctional cross-linker.

11. A reaction product according to claim 1, wherein the nitrogen-containing base is an amine, a polyamine or an imidazole.

12. A reaction product according to claim 1, wherein the nitrogen-containing base is an amine or imidazole of formula I, II or III
NR₁R₂R₃ (I),
R₄R₅N-A-NR₆R₇ (II) 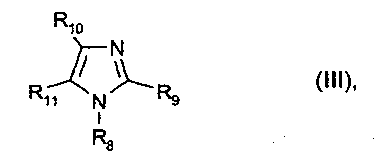
wherein R₁ to R₇ are each independently of the others hydrogen, C₁-C₁₂alkyl, unsubstituted or substituted phenyl, benzyl, phenylethyl, cyclopentyl or cyclohexyl, or R₂ and R₃ or R₄ and R₅ or R₆ and R₇ together form tetramethylene, pentamethylene, -(CH₂)₂-O-(CH₂)₂- or -(CH₂)₂-NH-(CH₂)₂-,
A is C₁-C₃₀alkanediyl,
R₈ to R₁₁ are each independently of the others hydrogen, C₁-C₁₈alkyl, phenyl or benzyl, or R₈ and R₉ or R₈ and R₁₁ or R₁₀ and R₁₁ together form tetramethylene, pentamethylene, -(CH₂)₂-O-(CH₂)₂- or -(CH₂)₂-NH-(CH₂)₂-.

13. A reaction product according to claim 1, wherein the nitrogen-containing base is 2-phenylimidazole, 2-isopropylimidazole, 2-dodecylimidazole, 2-heptadecylimidazole or 2-ethyl-4-methylimidazole.

14. A process for the preparation of a reaction product according to claim 1, wherein a microgel that contains carboxylic acid groups is reacted with a nitrogen-containing base, the reaction at a temperature of from 0°C to 200°C and preferably carried out in solution, whereby the starting materials being used in amounts such that the number of carboxylic acid groups is equal to or greater than the number of basic nitrogen atoms, the reaction product in the form of a solid powder is being isolated by means of spray-drying, lyophilisation or other known methods.

15. A composition comprising
(a) an epoxy resin having on average more than one 1,2-epoxide group per molecule, and
(b) a reaction product according to claim 1.

16. A composition according to claim 15, comprising additionally
(c) a hardener for the epoxy resin (a) that is different from component (b).

17. A composition according to claim 15, comprising as epoxy resin (a) a diglycidyl ether of bisphenol A or a diglycidyl ether of bisphenol F.

18. A composition according to claim 16, comprising a polycarboxylic acid anhydride as hardener (c).

19. A composition according to claim 15, wherein the weight ratio of components (a) : (b) is from 1 : 5 to 500 : 1.

20. A composition according to claim 16, wherein the weight ratio of components (a) : (b) is from 1 : 2 to 2000 : 1.

21. A cross-linked product obtainable by curing a composition according to claim 15.

## Revendications

1. Produit réactionnel d'un microgel, présentant des groupes acide carboxylique, et d'une base azotée, sous forme d'une poudre solide, le nombre des groupes acide carboxylique dans le produit étant identique ou supérieur au nombre d'atomes d'azote basiques.

2. Produit réactionnel selon la revendication 1, **caractérisé en ce que** le microgel est un copolymère d'au moins un acide carboxylique insaturé et d'au moins un réticulant multifonctionnel.

3. Produit réactionnel selon la revendication 1, **caractérisé en ce que** le microgel est un copolymère d'au moins un acide carboxylique insaturé, d'au moins un monomère vinylique sans groupes carboxyle et d'au moins un réticulant multifonctionnel.

4. Produit réactionnel selon les revendications 2 ou 3, **caractérisé en ce que** l'acide carboxylique insaturé est pris parmi l'acide acrylique, l'acide méthacrylique, l'acrylate de 2-carboxyéthyle, le méthacrylate de 2-carboxyéthyle, le phtalate de mono(2-acryloyléthyle), le phtalate de mono(2-méthacryloyléthyle), l'acide maléique, le maléate de monométhyle, le maléate de monoéthyle, l'acide fumarique, le fumarate de monométhyle, le fumarate de monoéthyle, l'acide itaconique, l'acide cinnamique, l'acide crotonique, l'acide 4-vinyl-cyclohexane-carboxylique, l'acide 4-vinylphénylacétique et l'acide p-vinylbenzoique.

5. Produit réactionnel selon les revendications 2 ou 3, **caractérisé en ce que** l'acide carboxylique insaturé est l'acide acrylique ou l'acide méthacrylique.

6. Produit réactionnel selon les revendications 2 ou 3, **caractérisé en ce que** le réticulant multifonctionnel est un acrylate ou méthacrylate polyfonctionnel d'un polyol aliphatique, cycloaliphatique ou aromatique, un produit d'addition d'acide acrylique ou d'acide méthacrylique et un composé polyglycidylique, un produit d'addition d'acide acrylique ou d'acide méthacrylique et d'acrylate ou de méthacrylate de glycidyle, un acrylate d'alcényle ou méthacrylate d'alcényle, un dialcénylcyclohexane ou un dialkylbenzène.

7. Produit réactionnel selon les revendications 2 ou 3, **caractérisé en ce que** le réticulant multifonctionnel est pris parmi le diacrylate d'éthylèneglycol, le diméthacrylate d'éthylèneglycol, le diacrylate de propylèneglycol, le diméthacrylate de propylèneglycol, le diacrylate de 1,4-butanediol, le diméthacrylate de 1,4-butanediol, le diacrylate de polyéthylèneglycol, le diméthacrylate de polyéthylèneglycol, le diacrylate de polypropylèneglycol, le diméthacrylate de polypropylèneglycol, le triacrylate de 1,1,1-triméthylolpropane, le triméthacrylate de 1,1,1-triméthylolpropane, le diacrylate d'éther diglycidylique du bisphénol A, le diméthacrylate d'éther diglycidylique du bisphénol A, l'acrylate d'allyle, le méthacrylate d'allyle, le divinylcyclohexane ou le divinylbenzène.

8. Produit réactionnel selon la revendication 3, **caractérisé en ce que** le monomère vinylique exempt de groupes acide carboxylique est un ester alkylique, un ester hydroxyalkylique ou ester glycidylique d'un acide carboxylique insaturé ou d'un dérivé du styrène.

9. Produit réactionnel selon la revendication 3, **caractérisé en ce que** le monomère vinylique exempt de groupes acide carboxylique est l'acrylate de méthyle, le méthacrylate de méthyle, l'acrylate d'éthyle, le méthacrylate d'éthyle, l'acrylate de 2-hydroxyéthyle, le méthacrylate de 2-hydroxyéthyle, l'acrylate de butyle, le méthacrylate de butyle, l'acrylate de 2-éthylhexyle, le méthacrylate de 2-éthylhexyle ou le styrène.

10. Produit réactionnel selon la revendication 1, **caractérisé en ce que** le microgel est un copolymère de 2 à 70 % en masse d'au moins un acide carboxylique insaturé, de 0 à 96 % en masse d'au moins un monomère vinylique exempt de groupes acide carboxylique et de 2 à 70 % en masse d'au moins un réticulant multifonctionnel.

11. Produit réactionnel selon la revendication 1, **caractérisé en ce que** la base azotée est une amine, une polyamine ou un imidazole.

12. Produit réactionnel selon la revendication 1, **caractérisé en ce que** la base azotée est une amine ou un imidazole de formule I, II ou III
NR₁R₂R₃ (I)
R₄R₅N-A-NR₆R₇ (II) 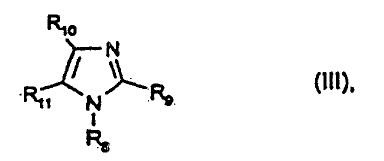
où R₁ à R₇ indépendamment les uns des autres représentent un atome d'hydrogène, un groupe alkyle en C₁-C₁₂, un groupe non substitué ou substitué phényle, benzyle, phényléthyle, cyclopentyle ou cyclohexyle, ou R₂ et R₃ ou R₄ et R₅ ou R₆ et R₇ représentent ensemble un groupe tétraméthylène, pentaméthylène, -(CH₂)₂-O-(CH₂)₂- ou -(CH₂)₂-NH-(CH₂)₂-,
A représente un groupe (alcane en C₁-C₃₀)diyle,
R₈ à R₁₁ indépendamment les uns des autres représentent un atome d'hydrogène, un groupe alkyle en C₁-C₁₈, phényle ou benzyle, ou R₈ et R₉ ou R₈ et R₁₁ ou R₁₀ et R₁₁ représentent ensemble un groupe tétraméthylène, pentaméthylène, -(CH₂)₂-O-(CH₂)₂- ou -(CH₂)₂-NH-(CH₂)₂-.

13. Produit réactionnel selon la revendication 1, **caractérisé en ce que** la base azotée est le 2-phénylimidazole, le 2-isopropylimidazole, le 2-dodécylimidazole, le 2-heptadécylimidazole ou le 2-éthyl-4-méthylimidazole.

14. Procédé pour la préparation d'un produit réactionnel selon la revendication 1, **caractérisé en ce qu'**on fait réagir le microgel présentant des groupes acide carboxylique sur une base azotée à une température de 0°C à 200°C, de préférence en solution, les produits de départ étant utilisés dans une quantité telle que le nombre de groupes acide carboxylique soit égal ou supérieur au nombre des atomes d'azote basiques, et le produit réactionnel est isolé sous forme d'une poudre solide par séchage par pulvérisation, lyhophilisation ou à l'aide d'autres méthodes connues.

15. Composition renfermant
a) une résine époxyde présentant en moyenne plus d'un groupe 1,2-époxyde par molécule et
b) un produit réactionnel selon la revendication 1.

16. Composition selon la revendication 15, renfermant en plus
c) un durcisseur pour la résine époxyde (a), différent du composant (b).

17. Composition selon la revendication 15, renfermant en tant que résine époxyde (a) un éther diglycidylique du bisphénol A ou un éther diglycidylique du bisphénol F.

18. Composition selon la revendication 16, renfermant un anhydride d'acide polycarboxylique en tant que durcisseur (c).

19. Composition selon la revendication 15, dans laquelle le rapport en masse des composants (a):(b) est de 1:5 à 500:1.

20. Composition selon la revendication 16, dans laquelle le rapport en masse des composants (a) : (b) est de 1:2 à 2000:1.

21. Produits réticulés que l'on peut obtenir par durcissement d'une composition selon la revendication 15.
